# EUROPEAN PATENT APPLICATION

(11) **EP 1 653 741 A2**
(43) Date of publication of application: **03.05.2006**
(21) Application number: 05023497.0
(22) Date of filing: 27.10.2005
(51) Int. Cl.: H04N 7/14, H04N 7/173

(54) **Information processor, portable terminal device, server computer, data save method and program**

(30) Priority: 29.10.2004 JP 2004317328
(71) Applicant: Fukuda, Junichi, Tokyo 107-0052 (JP)
(72) Inventor: Fukuda, Junichi, Tokyo 107-0052 (JP)
(74) Representative: HOFFMANN EITLE

(57) **Abstract**

To enable a user to save image data taken by use of a portable terminal in a server by performing easy operations and, at the same time, to perform the operations while recognizing a save destination in the server.

A computer system of the present invention includes a portable terminal and a server. The portable terminal includes: a control part 11 for controlling the entire system; a request reception part 14 for receiving a request to prepare a storage; a transmission part 12 for transmitting the request to the server; a reception part 13 for receiving a program and the like from the server in response to the request; and an installation part 15 for installing the received program and the like. Moreover, the program realizes a moving image acquisition part 16 for acquiring a moving image, a mailbox specification part 17 for specifying a mailbox in which the moving image is saved, and a corresponding information management part 18 for managing corresponding information between the mailbox of the portable terminal and the storage of the server. The transmission part 12 transmits the moving image to a storage of the server, the storage corresponding to a designated mailbox. Moreover, the program also realizes a moving image organizing part 19 for organizing moving images in the mailbox after the images are transmitted.

## Description

### Technical Field

The present invention relates to an information processor capable of transmitting various data including image data to another device, and the like.

### Background Art

In recent years, a portable terminal has become popular, such as a portable telephone capable of taking images (including moving images and still images). For example, the portable terminal is such as "FOMA (trademark registered)" by NTT DoCoMo. By using such a portable terminal with an image taking function, even a person who owns no video camera or still camera can easily take images. Moreover, even if the person owns a camera, he/she can easily take an image of a small ordinary scene, which is so trivial that he/she does not need the camera to take the image.

As described above, popularization of the portable terminal with the image taking function as hardware has made behavior of taking images common. However, it can hardly be said that behavior of actually enjoying images taken, such as saving, organizing, viewing and playback of the images, has widely prevailed.

This is because, although improvement in functions of the portable terminal has made it possible to take a relatively large volume of images (high-definition still images and moving images) , such images cannot be saved over a long period of time in a limited storage capacity of the portable terminal.

Moreover, since the portable terminal is assumed to be carried around, the terminal is likely to be damaged by dropping or exposure to water. Thus, even if images are taken and saved in the portable terminal, there is always a risk that the images cannot be viewed or replayed. Accordingly, the user cannot feel safe to save the images in the portable terminal.

Meanwhile, in order to avoid such a problem, there is also a case where images taken by the portable terminal are moved into a personal computer (hereinafter referred to as a "PC") or a memory card once and saved therein. However, such an operation is complicated and difficult, and the memory card is small and hard to handle. Therefore, it is the current situation that, even if anybody irrespective of age and sex can perform an operation of taking images by use of the portable terminal, not many people can perform even an operation of moving the images into the PC or the memory card.

Moreover, in consideration of a similar problem, there has also been proposed a service of uploading image data taken by a portable terminal to a server computer (for example, see Patent Document 1).

Meanwhile, there has also been a technology of transmitting image data taken by a digital camera to a desired destination by e-mail (for example, see Patent Document 2).

### Patent Document 1

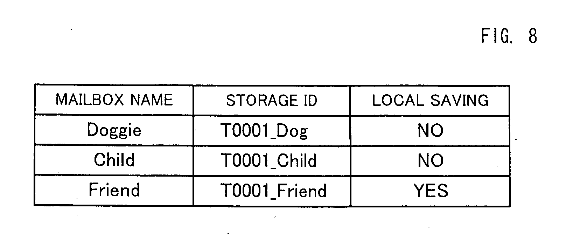

Japanese Patent Laid-Open No. 2003-338998 (Pages 5 and 6, Figs. 8 to 11)

### Patent Document 2

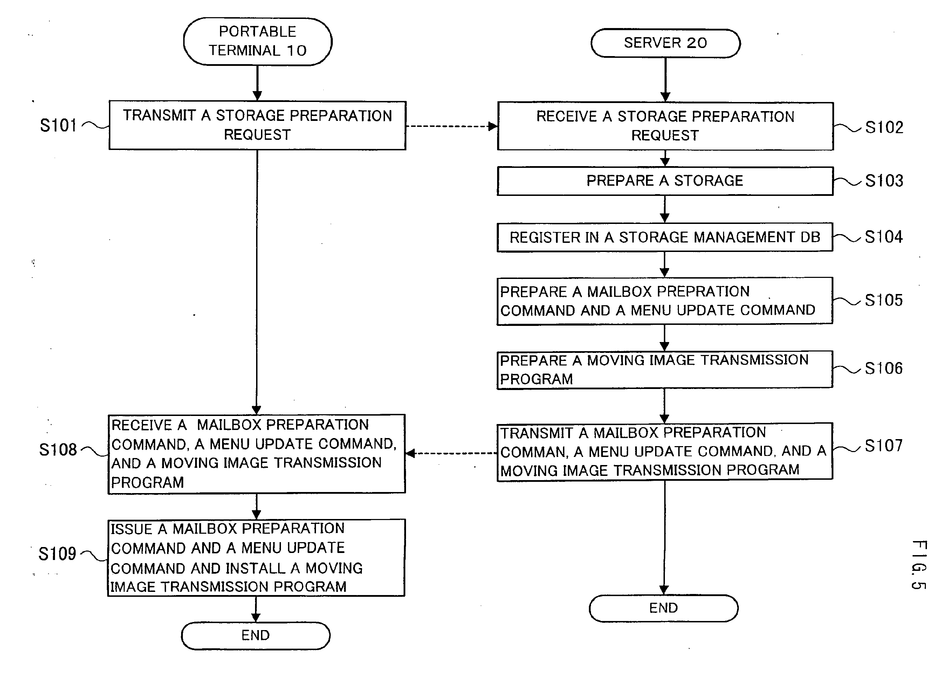

Japanese Patent Laid-Open No. 2004-165847 (Pages 5 to 7, Figs. 5 to 7)

### Disclosure of the Invention

### Problems to be Solved by the Invention

However, in Patent Document 1, the image data taken by the portable terminal is once moved into a PC and uploaded to the server computer. Such a method cannot be a solution for those who own no PC in the first place. Moreover, for those unfamiliar with operations of the PC, the above method is as complicated as the above-described case of saving the images after moving the images into the PC. Thus, the method cannot be an effective solution.

Moreover, in Patent Document 1, a scene number is attached to image data and the data is uploaded to the server computer. In the server computer, the image data is stored in a storage area corresponding to the scene number. Here, when the image data is uploaded, normally, a user cannot see the scene number attached to the image data. Thus, there is a problem that it is difficult for the user to know in which storage area on the server computer the image data is to be stored.

Similar problems can occur with general data other than image data.

Meanwhile, in Patent Document 2, by holding down a select button after taken images are once stored in a destination folder, image data in the destination folder is attached to an e-mail and transmitted to a server. Specifically, the technology of Patent Document 2 includes two operation processes including saving and transmission of the taken images.

However, by providing the two operation processes, first, there is a problem that operations are complicated. Particularly, for a user unfamiliar with a computer, even if he/she can easily take images, he/she has to subsequently take two steps of operation procedures such as saving and transmission, which becomes a major trigger that raises a hurdle in the computer use.

Moreover, by providing the two operation processes, there always is time when the taken images are not transmitted to the server even if the images are saved. If there is an accident such as sudden rain or loss in such time, there also arises a problem that image data is at risk of being lost.

The present invention was made to solve the technical problems as described above. It is an object of the present invention to enable a user to save data taken or prepared by use of an information processor in a server computer by performing easy operations and, at the same time, to perform the operations while recognizing a save destination in the server computer.

Moreover, it is another object of the present invention to enable the user to perform easy operations to save data in the information processor and thereby save the data in the server computer.

### Means for Solving the Problems

In order to achieve the above objects, the present invention has a configuration in which, only by saving data in a predetermined folder in an information processor, the data is transmitted to and saved in a save destination in another device, the destination corresponding to the folder, without performing an operation for transmission.

In the case where the above configuration is perceived from the information processor side, the information processor of the present invention includes: acquisition means for acquiring data to be saved; specification means for specifying a folder designated as a location to save the data among folders previously prepared in the processor; and transmission means for transmitting the data to a save destination in another device, the destination previously associated with the folder specified by the specification means, in response to a request to save the data in the folder.

Moreover, in the case where the above configuration is perceived from the another device (server computer) side, the server computer of the present invention includes: reception means for receiving data from an information processor; specification means for specifying a folder designated as a location to save the data among folders in the information processor; and save means for saving the data in a save destination previously associated with the folder specified by the specification means.

Moreover, the present invention can also be perceived as a server computer which performs preparation for enabling such data saving. In this case, firstly, the server computer includes: first preparation means for preparing a folder in another device; second preparation means for preparing a save destination for data, the destination corresponding to the folder designated as a location to save the data; and third preparation means for preparing corresponding information between the folder prepared by the first preparation means and the save destination prepared by the second preparation means. Moreover, secondly, the server computer includes: management means for managing corresponding information between a folder in another device and a save destination for data, the destination corresponding to the folder designated as a location to save the data; reception means for receiving a request to start use of the save destination; and registration means for registering, in the corresponding information, information indicating that the use of the save destination is started, in response to reception of the request.

Furthermore, the present invention can also be perceived as a data save method for saving data by transmitting the data to a second device from a first device. In this case, a data save method of the present invention includes the steps of: preparing corresponding information between a folder in the first device and a save destination in the second device; acquiring data by the first device; specifying a folder designated as a location to save the data among folders in the first device; obtaining a save destination in the second device, the destination corresponding to the specified folder, by referring to the corresponding information, in response to a request to save the data in the folder; and saving the data in the obtained save destination by the second device.

Meanwhile, the present invention can also be perceived as a computer program for allowing a computer to realize predetermined functions. In this case, the program of the present invention allows the computer to realize functions of: specifying a folder designated as a location to save data among folders previously prepared in the computer; and performing processing for transmitting the data to a save destination in another device, the destination being previously associated with the specified folder, in response to a request to save the data in the folder.

### Effects of the Invention

According to the present invention, it is possible for a user to save data taken or prepared by use of an information processor in a server computer by performing easy operations and, at the same time, to perform the operations while recognizing a save destination in the server computer.

### Best Mode for Carrying Out the Invention

With reference to the accompanying drawings, best modes for carrying out the present invention (hereinafter referred to as "embodiments") will be described in detail below.

### Brief Description of the Drawings

- Fig. 1: is a block diagram showing an entire configuration of a computer system to which an embodiment of the present invention is applied.
- Figs. 2 (a) to 2 (f): are views showing an example of a screen transition in a portable terminal according to the embodiment of the present invention.
- Fig. 3: is a block diagram showing a functional configuration of a portable terminal according to a first embodiment of the present invention.
- Fig. 4: is a block diagram showing a functional configuration of a server according to the first embodiment and a second embodiment of the present invention.
- Fig. 5: is a flowchart showing operations in storage preparation according to the first and second embodiments of the present invention.
- Fig. 6: is a table showing an example of contents of a storage management DB according to the first embodiment of the present invention.
- Fig. 7: is a flowchart showing operations in moving image transmission according to the first embodiment and a third embodiment of the present invention.
- Fig. 8: is a table showing an example of corresponding information included in a moving image transmission program according to the first and third embodiments of the present invention.
- Fig. 9: is a block diagram showing a functional configuration of a portable terminal according to the second embodiment of the present invention.
- Fig. 10: is a table showing an example of contents of a storage management DB according to the second embodiment of the present invention.
- Fig. 11: is a flowchart showing operations in moving image transmission according to the second embodiment of the present invention.
- Fig. 12: is a block diagram showing a functional configuration of a portable terminal according to the third embodiment of the present invention.
- Fig. 13: is a block diagram showing a functional configuration of a server according to the third embodiment of the present invention.
- Figs. 14 (a) and 14 (b): are tables showing examples of contents of a storage management DB according to the third embodiment of the present invention.
- Fig. 15: is a view showing an example of a screen in the portable terminal according to the third embodiment of the present invention.
- Fig. 16: is a flowchart showing operations in storage use registration according to the third embodiment of the present invention.
- Fig. 17: is a block diagram showing a hardware configuration of the portable terminal according to the embodiment of the present invention.
- Figs. 18 (a) and 18 (b): are views showing examples of a user interface used in the embodiment of the present invention.

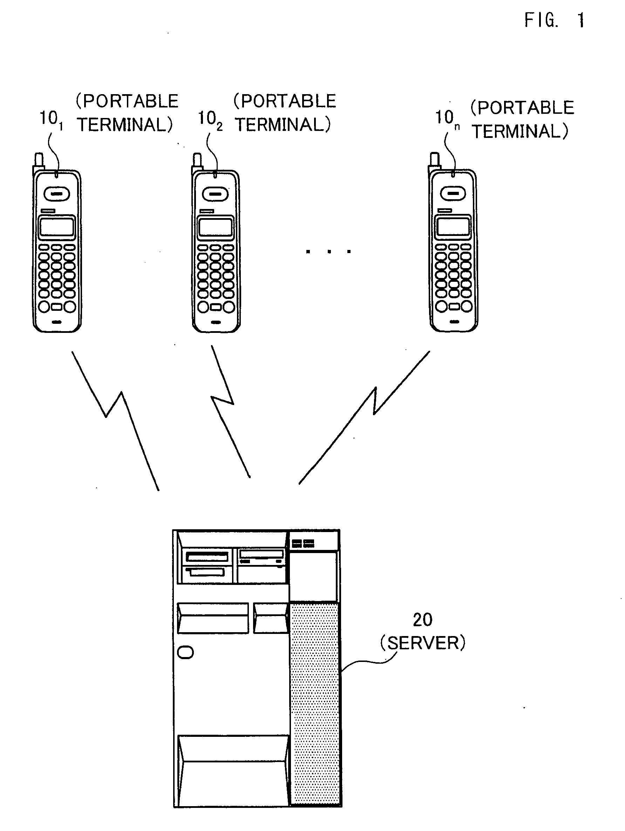

Fig. 1 shows an example of a computer system to which the present invention can be applied. This system includes portable terminals 10₁, 10₂, ... and 10ₙ and a server computer (hereinafter referred to as a "server") 20.

Each of the portable terminals 10₁, 10₂, ... and 10ₙ is a portable terminal (for example, a portable telephone or a digital camera with a communication function) which can take and transmit a moving image. A hardware configuration of the portable terminal may be the same as that of a general portable terminal and is assumed to include a CPU, a memory, a communication controller and the like. Note that, in the following description, one of the portable terminals 10₁, 10₂, ... and 10ₙ is called the portable terminal 10 as a representative thereof. Note that the hardware configuration of the portable terminal 10 will be described later.

The server 20 is a computer which can be accessed from the portable terminals 10₁, 10₂, ... and 10ₙ through radio communication. A hardware configuration of the server may be the same as that of a general computer and is assumed to include a CPU, a main storage unit, an auxiliary storage unit, a communication controller and the like.

According to this embodiment, in the portable terminal 10, a moving image is taken and one folder is selected from several folders as a location to save the moving image. Thereafter, only by saving the moving image in the selected folder, the moving image is transmitted to and saved in a save destination in the server 20, the destination corresponding to the folder. Here, the folder corresponding to the save destination in the server 20 can be likened to a mailbox since a moving image is delivered to the remote server 20 by selecting the folder and giving an instruction to save the moving image. Therefore, in the present specifications, such a folder will be particularly called a "mailbox". Specifically, the "mailbox" can also be regarded as a folder prepared in the portable terminal 10 based on the assumption that a moving image is transmitted to the server 20 by saving the moving image.

Meanwhile, the destination to save the moving image in the server 20 will be called a "storage" in the present specifications, in a sense of being a storage to store moving images.

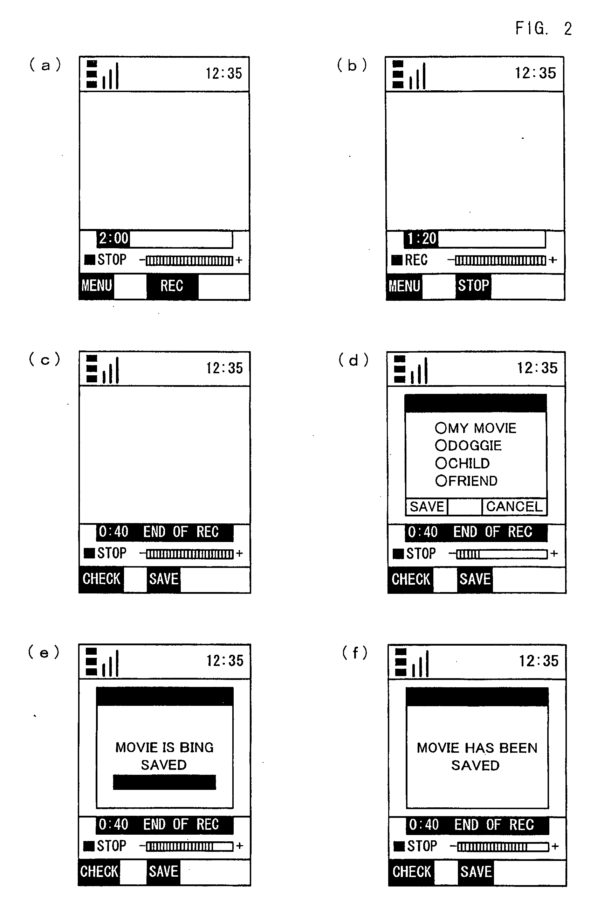

Figs. 2 (a) to 2 (f) show an example of a transition of a screen displayed on the portable terminal 10 from taking of a moving image to saving thereof in the server 20.

Fig. 2 (a) shows a screen at a point when a lens of the portable terminal 10 is merely pointed at a subject. At this point, recording is not started yet, which is indicated by display of "STOP" shown in a lower part of the screen.

Here, when the recording is started, the screen is shifted to that shown in Fig. 2 (b). In this event, the display of "STOP" in the lower part of the screen is switched to display of "REC".

Thereafter, when the recording is stopped, the screen is shifted to that shown in Fig. 2 (c). In this event, the display of "REC" in the lower part of the screen is switched to the display of "STOP" .

If "save" is instructed in this state, in this embodiment, a screen as shown in Fig. 2 (d) is displayed. Specifically, a list of folders is displayed, which can be designated as a location to save the moving image. In the example of Fig. 2 (d), "MY MOVIE", "doggie", "child" and "friend" are displayed as the folders. However, "MY MOVIE" is assumed to be a folder provided for locally saving images in the portable terminal 10. This is because there is also a case where a user may not want images to be saved in the server 20 but may wish to perform only local saving thereof. Meanwhile, "doggie", "child" and "friend" are mailboxes. In other words, if any one of those mailboxes is selected and an instruction to save a moving image is given, the moving image is delivered to a save destination in the server 20 corresponding thereto.

Note that, here, selection of a folder is performed by positioning a cursor to a folder to be selected. Moreover, in Fig. 2 (d) , a "save" button is a button for saving moving images in the selected folder, and a "cancel" button is a button for canceling once saving of moving images and returning to the previous screen.

When the user instructs "save", a message saying that a moving image is being saved is displayed as shown in Fig. 2 (e). Thereafter, once saving of the moving image is completed, a message to that effect is displayed as shown in Fig. 2 (f).

Next, a concrete embodiment for saving images as described above will be described in detail.

### First Embodiment

First, configurations of a portable terminal 10 and a server 20 according to this embodiment will be described.

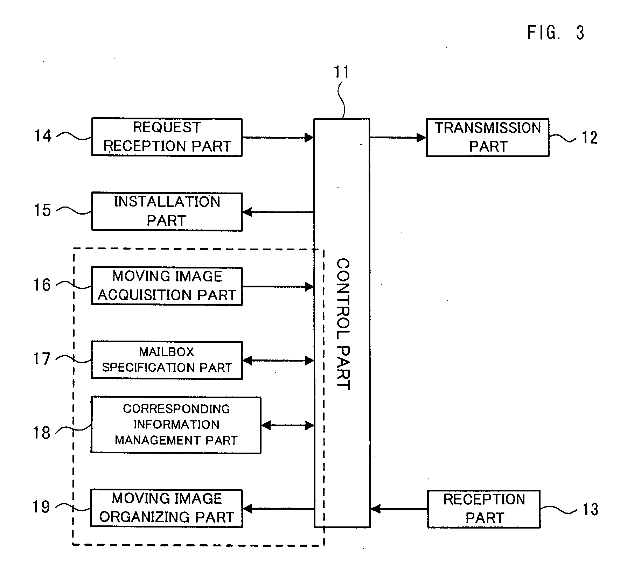

Fig. 3 is a block diagram showing the configuration of the portable terminal 10. As shown in Fig. 3, the portable terminal 10 includes a control part 11, a transmission part 12, a reception part 13, a request reception part 14, an installation part 15, a moving image acquisition part 16, a mailbox specification part 17, a corresponding information management part 18 and a moving image organizing part 19. The control part 11 is a functional part for controlling entire operations of the portable terminal 10. The transmission part 12 is a functional part for transmitting information to the server 20 and can be regarded as transmission means. The reception part 13 is a functional part for receiving information from the server 20. The request reception part 14 is a functional part for receiving a request to prepare a storage in the server 20 from a user. The installation part 15 is a functional part for installing a program received from the server 20, and the like. Moreover, the moving image acquisition part 16 is a functional part for acquiring a saved moving image and can be regarded as acquisition means. The mailbox specification part 17 is a functional part for specifying a mailbox in which the moving image is saved, and can be regarded as specification means. The corresponding information management part 18 is a functional part for managing corresponding information between the mailbox of the portable terminal 10 and the storage of the server 20. Moreover, the moving image organizing part 19 is a functional part for organizing moving images in the mailbox after the moving images are transmitted, and can be regarded as save means for saving predetermined information.

Note that the respective functional parts described above can be realized by use of only the hardware but also be realized by use of a combination of the hardware and the software. In the latter case, an unillustrated CPU of the portable terminal 10 reads and executes a program stored in an unillustrated memory, for example. Thus, the respective functional parts are realized. Moreover, particularly, in Fig. 3, a part of the control part 11, which is surrounded with a broken line, the respective functional parts including the moving image acquisition part 16, the mailbox specification part 17, the corresponding information management part 18 and the moving image organizing part 19 are realized by allowing the unillustrated CPU of the portable terminal 10 to read and execute a program installed by the installation part 15.

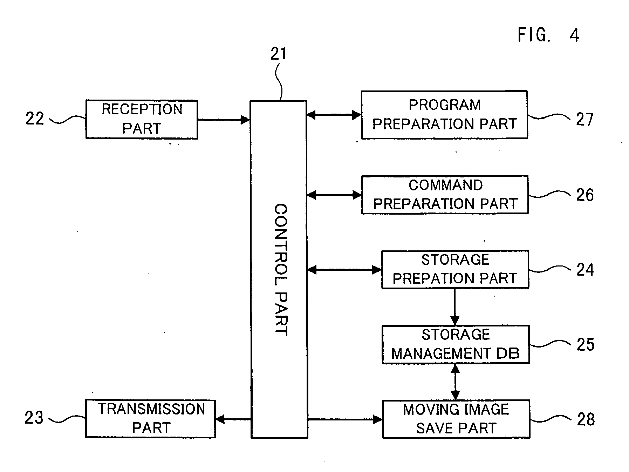

Fig. 4 is a block diagram showing the configuration of the server 20. As shown in Fig. 4, the server 20 includes a control part 21, a reception part 22, a transmission part 23, a storage preparation part 24, a storage management database (hereinafter referred to as a "storage management DB") 25, a command preparation part 26, a program preparation part 27 and a moving image save part 28.

The control part 21 is a functional part for controlling entire operations of the server 20. The reception part 22 is a functional part for receiving information from the portable terminal 10, and can be regarded as reception means for receiving image data as well as specification means for specifying a mailbox designated by the portable terminal 10. The transmission part 23 is a functional part for transmitting information to the portable terminal 10. The storage preparation part 24 is a functional part for preparing a storage in response to a request received from the portable terminal 10 and preparing corresponding information between the mailbox and the storage. In addition, the storage preparation part 24 can be regarded as storage preparation means (second preparation means) and corresponding information preparation means (third preparation means). The storage management DB 25 is a database which stores information for managing the storage. The command preparation part 26 is a functional part for preparing a command to be transmitted to the portable terminal 10, and can be regarded as mailbox preparation means (first preparation means) and menu preparation means. The program preparation part 27 is a functional part for preparing a program to be transmitted to the portable terminal 10, and can be regarded as program preparation means. Moreover, the moving image save part 28 is a functional part for saving moving images received from the portable terminal 10 in the storage as well as updating usage of the storage management DB 25, and can be regarded as save means.

Note that the respective functional parts described above can be realized by use of only the hardware but also be realized by use of a combination of the hardware and the software. In the latter case, an unillustrated CPU of the server 20 reads and executes a program stored in an unillustrated auxiliary storage unit, for example. Thus, the respective functional parts are realized.

Next, operations of this embodiment will be described.

First, with reference to Fig. 5, description will be given of an operation when a mailbox of the portable terminal 10 and a storage of the server 20, the storage corresponding to the mailbox, are prepared.

A user makes a request to prepare a mailbox to the portable terminal 10. Thereafter, the request reception part 14 receives the request and transfers the request to the control part 11. Thus, the control part 11'prepares a signal for requesting preparation of a storage corresponding to the mailbox (hereinafter referred to as a "storage preparation request"), and transfers the signal to the transmission part 12. Thereafter, the transmission part 12 transmits the storage preparation request to the server 20 (Step 101).

In the server 20, the reception part 22 receives the storage preparation request and transfers the request to the control part 21 (Step 102).

Thus, the control part 21 instructs the storage preparation part 24 to prepare the storage. Accordingly, the storage preparation part 24 prepares the storage (Step 103). Specifically, a region having a capacity designated by the user is secured as the storage, and a storage ID for accessing the region is generated.

Here, the storage ID is information for uniquely identifying the storage. In addition, the storage ID is prepared in such a manner that a terminal ID for uniquely identifying the portable terminal 10 and a storage name designated by the user are combined so as not to have IDs overlapping between users. For example, it is assumed that a user of a terminal "T0001" requests for preparation of a storage having a name of "dog" . In this case, a storage ID "T0001_dog" is prepared in this embodiment. In addition, if the user of the terminal "T0001" prepares a storage having a name of "child", a storage ID is set as "T0001_child". Moreover, if the user prepares a storage having a name of "friend", a storage ID is set as "T0001_friend".

Meanwhile, in this embodiment, all storages provided by the server 20 are assumed to exist under the same directory. In order to express a directory immediately below the directory described above, the storage ID is used. For example, it is assumed that a storage provided by the server 20 exists under "www.aaa.co.jp/memorybank". In this case, an address of the storage having the name of "dog", which is prepared by the user of the terminal "T0001", is set as "www.aaa.co.jp/memorybank/T0001_dog". In addition, an address of the storage having the name of "child", which is prepared by the user of the terminal "T0001", is set as "www.aaa.co.jp/memorybank/T0001_child". Moreover, an address of the storage having the name of "friend" is set as "www.aaa.co.jp/memorybank/T0001_friend".

Moreover, the storage preparation part 24 registers correspondence between the terminal ID and the storage ID in the storage management DB 25. Thereafter, when the processing is completed, the storage preparation part 24 notifies the control part 21 to that effect (Step 104).

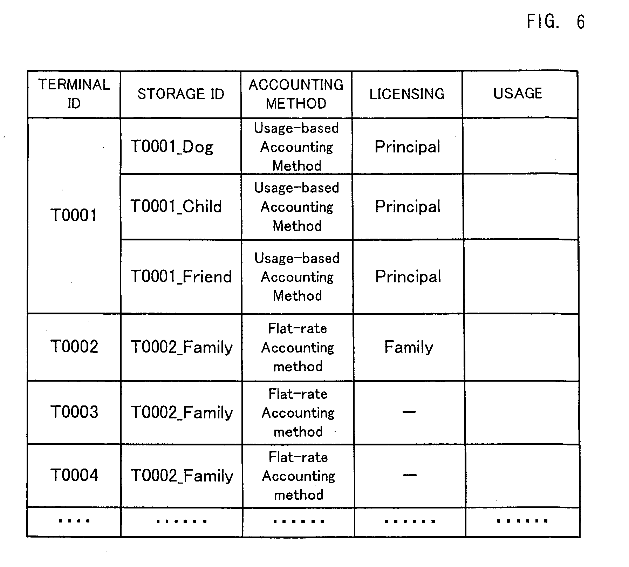

Here, with reference to Fig. 6, description will be given of contents of information to be registered in the storage management DB 25.

As shown in Fig. 6, the storage management DB 25 stores information such as an accounting method, licensing and usage, besides the terminal ID and the storage ID. Each piece of the information including the accounting method and the licensing is transmitted to the server 20 from the portable terminal 10 when the storage preparation request is transmitted, and registered in the storage management DB 25. Meanwhile, as to the usage, since no moving image is stored at this point, no values are set.

Hereinafter, respective items will be described in detail.

As described above, the terminal ID is information for uniquely identifying the portable terminal 10 owned by the user. For example, it is possible to adopt what is convenient for a company running the server 20, such as a device ID given when the portable terminal 10 is manufactured, a telephone number of the portable terminal 10, and the like.

As described above, the storage ID is information for uniquely identifying the storage. It is possible to use one prepared according to the rules already described.

The accounting method is a method for accounting related to charges generated by storing moving images in the storage. For example, there is a usage-based accounting method by which a charge amount is determined based on a size of a moving image and duration of storage. In addition, there is also a flat-rate accounting method with a fixed monthly charge, for example, regardless of the size of the moving image and the duration of storage. Note that the accounting method may be registered for each of the portable terminals 10 or for each of the storages.

The licensing is information indicating whether or not a person who prepares each storage permits someone to use the storage. For example, as to the storages "T0001_dog", "T0001_child" and "T0001_friend", "principal" is set. Thus, only the user of the terminal "T0001" is set to be able to use those storages. Meanwhile, as to "T0002_family", "family" is set. Thus, users of terminals "T0003" and "T0004", which are members of a family of a user of a terminal "T0002", can also use the storage. Note that it is assumed that association as to whether the respective users are members of a family is separately established.

Back to Fig. 5 again, the description of the operations will be continued.

The control part 21 instructs the command preparation part 26 to prepare a command to be transmitted to the portable terminal 10. Accordingly, the command preparation part 26 prepares and transfers the command to the control part 21 (Step 105).

Specifically, the command preparation part 26 prepares the following two commands.

One is a command for preparing a mailbox in the portable terminal 10 (hereinafter referred to as a "mailbox preparation command"). For example, if a user prepares a storage having a name of "dog", the command preparation part 26 prepares a command for preparing a mailbox having a name of "dog" in the portable terminal 10. Moreover, if the user prepares a storage having a name of "child" , the command preparation part 26 prepares a command for preparing a mailbox having a name of "child" in the portable terminal 10. The same goes for the case where a storage having a name of "friend" is prepared.

The other one is a command for updating a menu displayed when the portable terminal 10 saves moving images (hereinafter referred to as a "menu update command"). For example, it is assumed that only "MY MOVIE" is displayed as an option in a menu displayed when the portable terminal 10 having no mailbox prepared saves moving images. In this case, if the user prepares the storage having the name of "dog", the command preparation part 26 prepares a command for including a mailbox "dog" as an option in the menu. Moreover, if the user prepares the storage having the name of "child", the command preparation part 26 prepares a command for including a mailbox "child" as an option in the menu. The same goes for the case where the storage having the name of "friend" is prepared. Alternatively, if the user simultaneously prepares the storages having the names of "dog", "child" and "friend" , the command preparation part 26 prepares a command for simultaneously including mailboxes "dog", "child" and "friend" as options in the menu.

Moreover, the control part 21 instructs the program preparation part 27 to prepare a program for transmitting a moving image to the server 20 (hereinafter referred to as a "moving image transmission program"). Accordingly, the program preparation part 27 prepares the moving image transmission program and transfers the program to the control part 21 (Step 106).

Here, the moving image transmission program is one for recognizing that a moving image is saved in a mailbox prepared in the portable terminal 10 and for transmitting the moving image to a corresponding storage on the server 20. In order to realize the function described above, it is required to include corresponding information between the mailbox of the portable terminal 10 and the storage of the server 20, which will be described in detail later.

Thereafter, the control part 21 transfers the mailbox preparation command, the menu update command and the moving image transmission program to the transmission part 23, and the transmission part 23 transmits those described above to the portable terminal 10 (Step 107).

In the portable terminal 10, the reception part 13 receives the mailbox preparation command, the menu update command and the moving image transmission program, and transfers those to the control part 11 (Step 108).

Thereafter, the control part 11 instructs the installation part 15 to issue the mailbox preparation command and the menu update command and to install the moving image transmission program. Accordingly, the installation part 15 issues the commands and installs the moving image transmission program (Step 109). Specifically, a mailbox is prepared by issuing the mailbox preparation command. In addition, a menu displayed when a moving image is saved is updated by issuing the menu update command. Moreover, the respective functional parts including the moving image acquisition part 16, the mailbox specification part 17, the corresponding information management part 18 and the moving image organizing part 19 are provided in the portable terminal 10 by installing the moving image transmission program.

Meanwhile, this embodiment permits the presence of a storage capable of saving moving images transmitted from a plurality of the portable terminals 10, such as the storage "T0002_family" shown in Fig. 6. Thus, for example, it is possible to prepare one storage for a family and to allow all members of the family to use the storage.

In the example of Fig. 6, it is understood that the storage "T0002_family" is a storage prepared by the user of the terminal "T0002". On the other hand, the users of the terminals "T0003" and "T0004" secure a storage for saving moving images not by requesting for preparation of the storage "T0002_family" but by requesting for use of the already prepared "T0002 family".

Also in this case, approximately the same operations as those shown in Fig. 5 are performed. However, depending on the steps, processing slightly different from that in the case where the storages are prepared may be performed.

Specifically, a signal for requesting for use of the already prepared storage (for example, "T0002_family") (a storage use request) is transmitted in Step 101, and the storage use request is received in Step 102. Moreover, in Step 103, a storage is not prepared but it is determined whether or not a storage of which use is requested can be used. Specifically, it is determined whether setting of licensing of the storage in the storage management DB 25 shown in Fig. 6 is "family" or the like other than "principal". Thereafter, as a result of the determination, if the use of the storage is permitted, correspondence among the terminal ID, the storage ID and the accounting method is registered in the storage management DB 25 in Step 104.

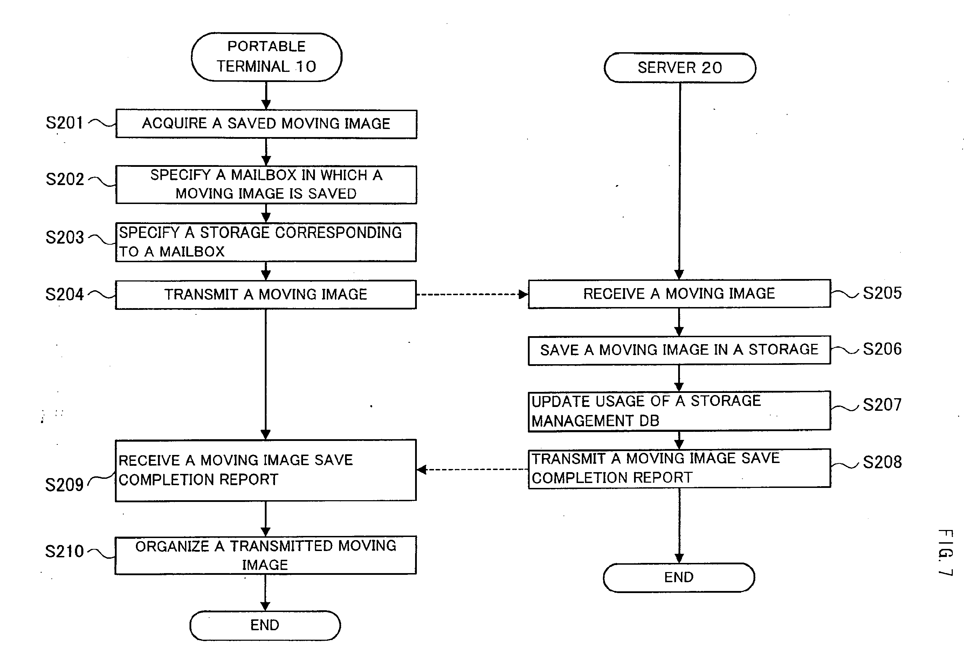

Next, with reference to Fig. 7, description will be given of operations when a moving image is transmitted to and saved in the server 20 by saving the moving image in a mailbox of the portable terminal 10.

First, a user takes a moving image and requests for saving of the image in a specific mailbox by performing operations as described with reference to Figs. 2 (a) to 2 (f). Thus, the moving image acquisition part 16 acquires the moving image saved in the specific mailbox and transfers the image to the control part 11 (Step 201).

Moreover, the mailbox specification part 17 specifies the mailbox in which the moving image is saved and notifies the control part 11 (Step 202).

Thus, the control part 11 instructs the corresponding information management part 18 to obtain and return a storage ID corresponding to the specified mailbox. Accordingly, the corresponding information management part 18 obtains the storage ID by referring to the corresponding information included in the moving image transmission program in Step 106, and returns the ID to the control part 11 (Step 203).

Here, with reference to Fig. 8, description will be given of the corresponding information managed by the corresponding information management part 18. As shown in Fig. 8, the corresponding information includes names of mailboxes in the portable terminal 10, storage IDs in the server 20, and "local saving" which indicates whether or not a moving image is locally saved after transmitted to the server 20 from the portable terminal 10.

Although the same names of the mailboxes as those of the storages prepared in the server 20 are first defined, the user can subsequently change the names. For example, although one of the storages has the name of "dog" when the storage is prepared in the server 20, the name is changed to "doggie" in Fig. 8.

The storage IDs are IDs prepared when storages are prepared in the server 20. In this embodiment, as described above, all the storages exist under the same directory. Thus, addresses of the storages can be obtained from the storage IDs. For example, assuming that storages provided by the server 20 exist under "www.aaa.co.jp/memorybank", an address of the storage "T0001_dog" is set as "www.aaa.co.jp/memorybank/T0001_dog". Moreover, an address of the storage "T0001_child" is set as www.aaa.co.jp/memorybank/T0001_child, and an address of the storage "T0001_friend" is set as "www.aaa.co.jp/memorybank/T0001_friend".

The local saving is an item set by the user after the moving image transmission program is installed. When "YES" is set in the local saving, a moving image continues to be saved in the portable terminal 10 even if the moving image is transmitted to the server 20 and saving thereof is successful. On the other hand, when "NO" is set in the local saving, a moving image is deleted from the portable terminal 10 if the moving image is transmitted to the server 20 and saving thereof is successful.

Back to Fig. 7 again, the description of the operations will be continued.

The control part 11 which has received the returned storage ID corresponding to the mailbox instructs the transmission part 12 to transmit the moving image acquired in Step 201 to the storage. Accordingly, the transmission part 12 transmits the moving image to the storage in the server 20 (Step 204).

In the server 20, the reception part 22 receives the moving image and transfers to the control part 21 the moving image and an address of a storage to save the moving image (Step 205).

Thus, the control part 21 instructs the moving image save part 28 to save the moving image in a designated storage. Accordingly, the moving image save part 28 saves the moving image in the designated storage (Step 206).

Moreover, the moving image save part 28 updates usage of the storage management DB 25, and, once the processing is completed, notifies to that effect (Step 207). Here, as the usage, for example, it is conceivable to record information which makes it possible to figure out how many megabytes of moving images are stored in a storage for how many days.

Thus, the control part 21 instructs the transmission part 23 to transmit information indicating that saving of the moving image is completed (hereinafter referred to as a "moving image save completion report"). Accordingly, the transmission part 23 transmits the moving image save completion report to the portable terminal 10 (Step 208).

In the portable terminal 10, the reception part 13 receives the moving image save completion report and transfers the report to the control part 11 (Step 209).

Thereafter, the control part 11 instructs the moving image organizing part 19 to organize moving images transmitted. Accordingly, the moving image organizing part 19 organizes the moving images (Step 210). Note that the control part 11, when instructing organizing of the moving images, transfers to the moving image organizing part 19 setting information concerning whether or not the images are to be locally saved, the information being obtained from the corresponding information management part 18. By referring to the setting information, the moving image organizing part 19 does not organize the moving images if the local saving is set "YES" , and organizes the moving images as below if the local saving is set "NO".

Specifically, the moving images which have been successfully saved in the server 20 can be replayed by accessing the server 20 if necessary. Therefore, saving of the moving images also in the portable terminal 10 is a wasteful use of a storage region. On the other hand, it is not desirable to completely delete the moving images transmitted, because the user cannot check, by use of the portable terminal 10, what kinds of moving images he/she has transmitted. Accordingly, in this embodiment, the transmitted moving image itself is deleted, and, instead, information to be a trace of transmission of the moving image (hereinafter referred to as "trace information") is left. As the trace information, thumbnails of images when moving images are started, date and time of taking moving images, and the like, for example, are conceivable.

Note that, if no moving image save completion report is received in a given amount of time in Step 209, it is conceivable that the portable terminal 10 is in an environment where the terminal cannot access the server 20. Therefore, moving images are temporarily saved in the mailbox and retransmitted after a lapse of a given amount of time.

As described above, moving images taken by the portable terminal 10 are saved in the storages of the server 20.

Thereafter, the user can replay the moving images by accessing the server 20 from the portable terminal 10. Such playback of the moving images can be performed by selecting trace information of a moving image the user wishes to replay among the trace information left in the mailbox. Moreover, the user can also delete the moving images by accessing the server 20 from the portable terminal 10. Such deletion of the moving images can also be performed by selecting trace information of a moving image the user wishes to delete among the trace information left in the mailbox.

Meanwhile, the user can also replay or delete moving images by accessing the server 20 via the Internet from a PC or the like. However, in the case where the user accesses the server from the PC or the like, the user has to previously access the server 20, by use of the portable terminal 10, to obtain a user ID and a password, and is required to use the user ID and the password for access. Specifically, a table in which the terminal ID, the user ID and the password are associated with each other is prepared in the server 20. Accordingly, if a combination of inputted user ID and password coincides with that registered, a terminal ID corresponding to the user ID is returned. Thereafter, on a screen of a PC or the like, only a storage corresponding to the terminal ID is displayed. Assuming, for example, that the user of the terminal "T0001" accesses the server, "dog", "child" and "friend" are displayed as storages. Accordingly, playback and deletion of moving images stored in the storages displayed can be freely performed in principle.

However, in such a case as the storage "T0002_family" shown in Fig. 6, control is performed in such a manner that playback and deletion of moving images stored in the storage can be performed only by the user himself/herself who has registered. Specifically, when a moving image is transmitted in Step 204, an ID of a terminal which transmits the moving image is also transmitted. Thereafter, when the moving image is stored in a storage, the terminal ID is stored as accompanying information on the moving image. Thus, playback and deletion are permitted only if a terminal ID obtained from an ID of a user who requests for playback or deletion coincides with the terminal ID stored as the accompanying information on the moving image.

Accordingly, the operations of this embodiment are finished.

### Second Embodiment

In the first embodiment, the corresponding information between the mailbox of the portable terminal 10 and the storage of the server 20 is included in the moving image transmission program and transmitted to the portable terminal 10. Thus, the processing of obtaining the storage of the server 20 from the mailbox of the portable terminal 10 is performed in the portable terminal 10. On the other hand, in this embodiment, a server is configured in such a manner that corresponding information between a mailbox of a portable terminal 10 and a storage of the server 20 is stored in the server 20, and processing of obtaining the storage of the server 20 from the mailbox of the portable terminal 10 is performed in the server 20.

First, configurations of the portable terminal 10 and the server 20 according to this embodiment will be described.

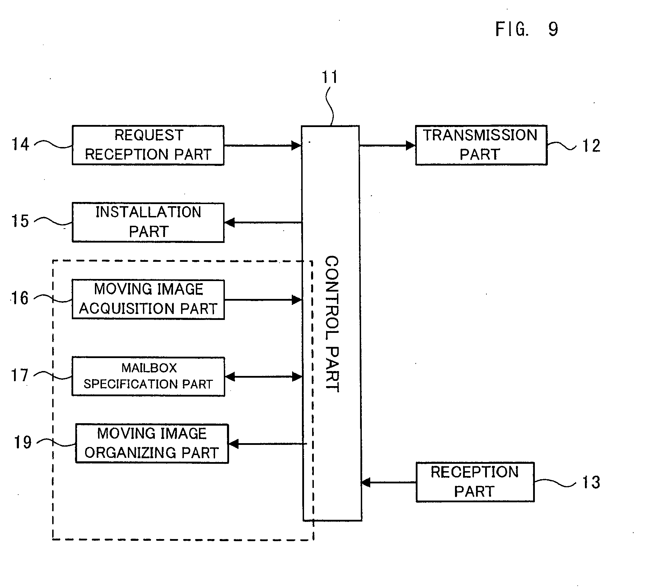

Fig. 9 is a block diagram showing the configuration of the portable terminal 10. Compared to the configuration of the portable terminal 10 in the first embodiment shown in Fig. 3, the portable terminal 10 of this embodiment is different only in having no corresponding information management part 18. This is because management of the corresponding information is performed in the server 20. Note that a general configuration of the server 20 is the same as that shown in Fig. 4.

Next, description will be given of operations of this embodiment.

Operations in preparation of a mailbox of the portable terminal 10 and a corresponding storage of the server 20 are approximately the same as those shown in Fig. 5.

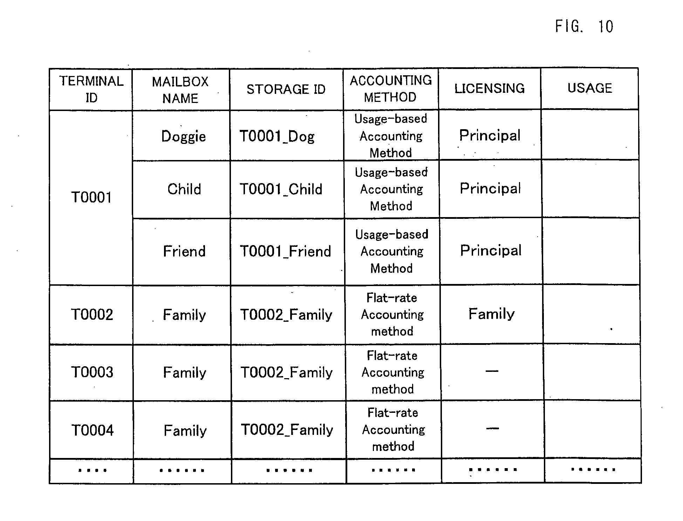

However, information registered in a storage management DB 25 in Step 104 is different from that in the first embodiment. Fig. 10 shows contents of information registered here. As shown in Fig. 10, in the storage management DB 25 according to this embodiment, names of mailboxes are added to the storage management DB 25 according to the first embodiment. Note that the names of mailboxes can also be changed by the user using the portable terminal 10. In such a case, changes are reflected on the names of mailboxes in the storage management DB 25.

Moreover, in this embodiment, a moving image transmission program prepared in Step 106 includes no corresponding information. Specifically, in this embodiment, the moving image transmission program is a program for recognizing that a moving image is saved in a mailbox prepared in the portable terminal 10 and for transmitting the moving image to the server 20 together with the name of the mailbox.

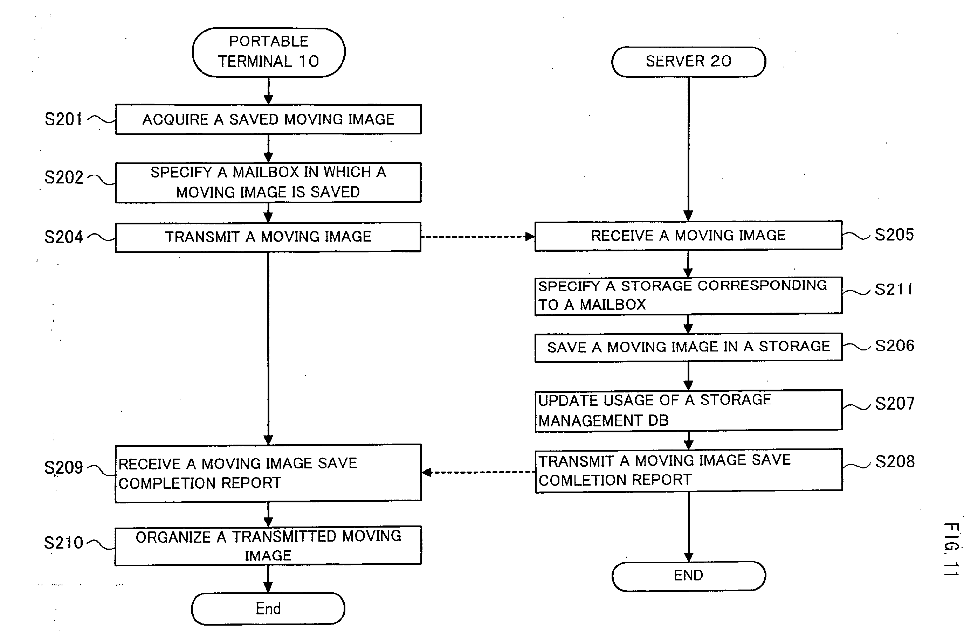

Moreover, Fig. 11 shows operations when a moving image is transmitted to and saved in the server 20 by saving the moving image in a mailbox of the portable terminal 10. Since the flowchart of Fig. 11 is slightly changed from that of Fig. 7, only different points therebetween will be described.

First, in this embodiment, the portable terminal 10 does not perform such storage specification as performed in Step 203 of Fig. 7. Moreover, in Step 204, a moving image is not transmitted to a specific storage of the server 20 but is transmitted to the server 20 together with a name of a mailbox.

Meanwhile, in Step 211, by referring to the storage management DB 25, the server 20 specifies a storage corresponding to the received name of the mailbox.

Accordingly, the description of this embodiment is finished.

### Third Embodiment

In the first and second embodiments, preparation of mailboxes, menu update and installation of the moving image transmission program in the portable terminal 10 are performed by operations by the user after he/she purchases the portable terminal 10. Meanwhile, in this embodiment, it is assumed that, when a portable terminal 10 is purchased, mailboxes, a menu and a program are already installed in the portable terminal 10. However, at this point, the mailboxes have no names, and no options are set in the menu. Therefore, a user performs these settings by connecting to a server 20 after he/she purchases the portable terminal 10.

First, configurations of the portable terminal 10 and the server 20 according to this embodiment will be described.

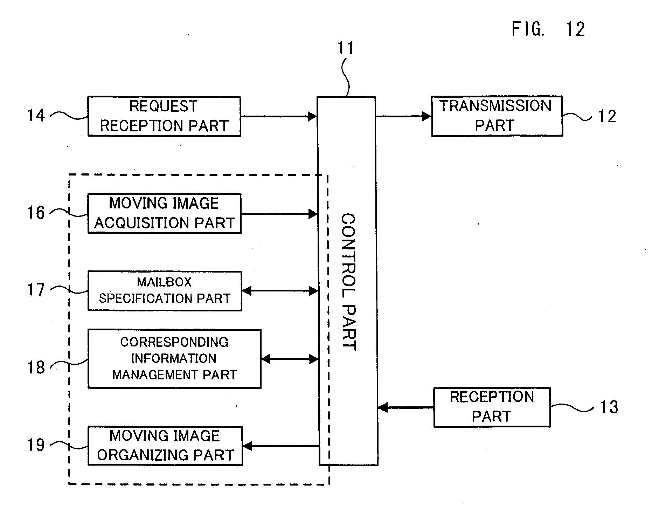

Fig. 12 is a block diagram showing the configuration of the portable terminal 10. Compared to the configuration of the portable terminal 10 in the first embodiment shown in Fig. 3, the portable terminal 10 of this embodiment is different only in having no installation part 15. This is because the mailboxes, the menu and the program are installed in the portable terminal 10 from the start and are not to be downloaded from the server 20 and installed.

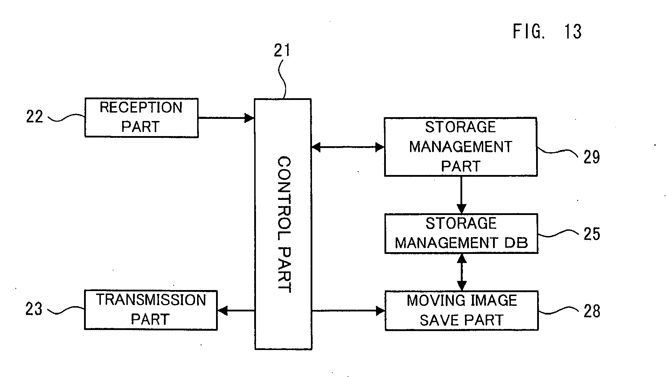

Fig. 13 is a block diagram showing the configuration of the server 20. Compared to the configuration of the server 20 in the first embodiment shown in Fig. 4, the server 20 of this embodiment is different in including a storage management part 29 instead of the storage preparation part 24 and in not having the command preparation part 26 and the program preparation part 27. The reason for the former point is because storages are already prepared and a function of newly preparing storages is not required. Moreover, the reason for the latter point is because the mailboxes, the menu and the program are installed in the portable terminal 10 from the start, and the server 20 is not to instruct preparation thereof.

Next, description will be given of operations of this embodiment.

As described above, mailboxes are already provided in the portable terminal 10 at the time of purchase thereof. However, at this point, the mailboxes have no names and can be distinguished by serial numbers, for example. Moreover, in the server 20, IDs of storages to store moving images transmitted from the portable terminal 10 are already managed at this point. However, the storages also have no names at this point and can be distinguished by serial numbers corresponding to the mailboxes, for example. Specifically, the mailboxes and the storages are previously associated with each other in the following manner. More specifically, a storage ID corresponding to a first mailbox of a terminal "T0001" is "T0001_01", a storage ID corresponding to a second mailbox is "T0001_02" , and a storage ID corresponding to a third mailbox is "T0001_03".

Moreover, a moving image transmission program is previously installed in the portable terminal 10. This moving image transmission program already includes such a function as to transmit, when a moving image is saved in a certain mailbox, the moving image to a storage associated with the mailbox.

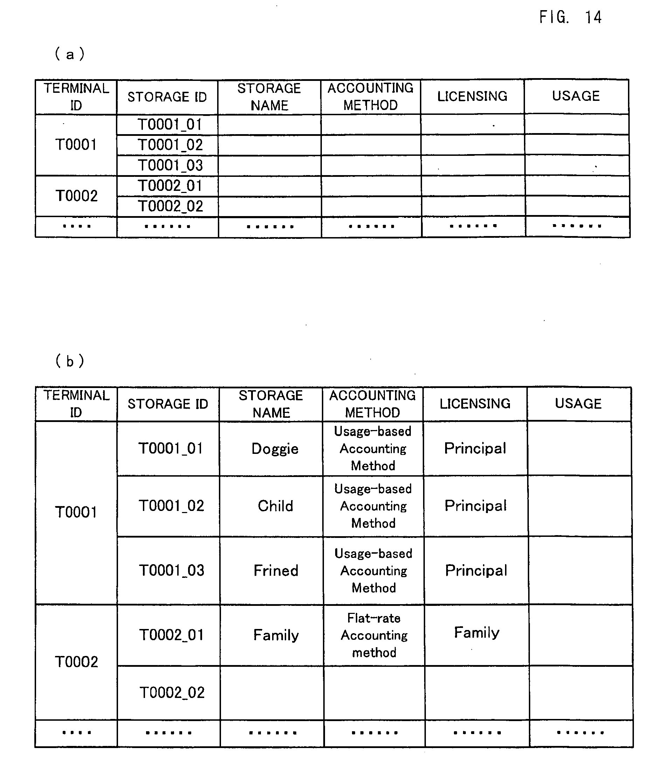

Furthermore, at this point, in the server 20, a storage management DB 25 as shown in Fig. 14 (a) is already prepared. Specifically, for each terminal, a terminal ID and a storage ID of a storage to be allocated to the terminal are associated with each other. Note that, at this point, since there is no request for use by the user yet, items of an accounting method, licensing and usage are left blanks.

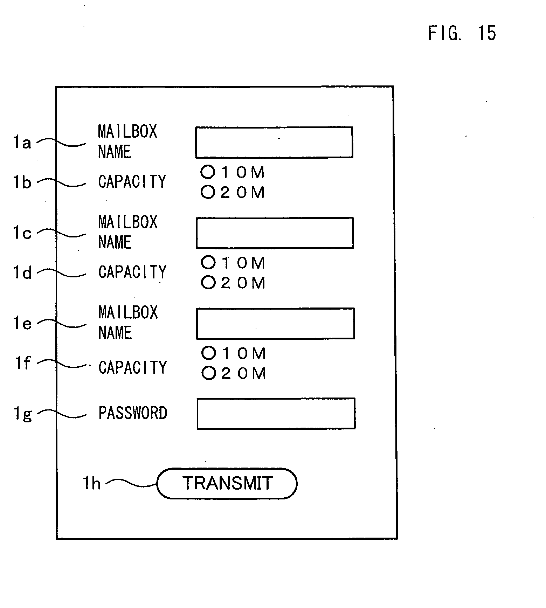

First, when the user performs an operation for registration to start using this service on the portable terminal 10, a screen as shown in Fig. 15 is displayed. This is an example in the case where the user applies for 3 mailboxes when he/she purchases the portable terminal 10. In the example, 3 mailbox name setting fields 1a, 1c and 1e and capacity selection fields 1b, 1d and 1f for the 3 mailboxes are displayed. After names of mailboxes are set and capacities thereof are selected, a password preset in the portable terminal 10 is entered in a password entry field 1g, and a transmit button 1h is pressed. Thus, use of storages is requested to the server 20 by use of the set names of mailboxes.

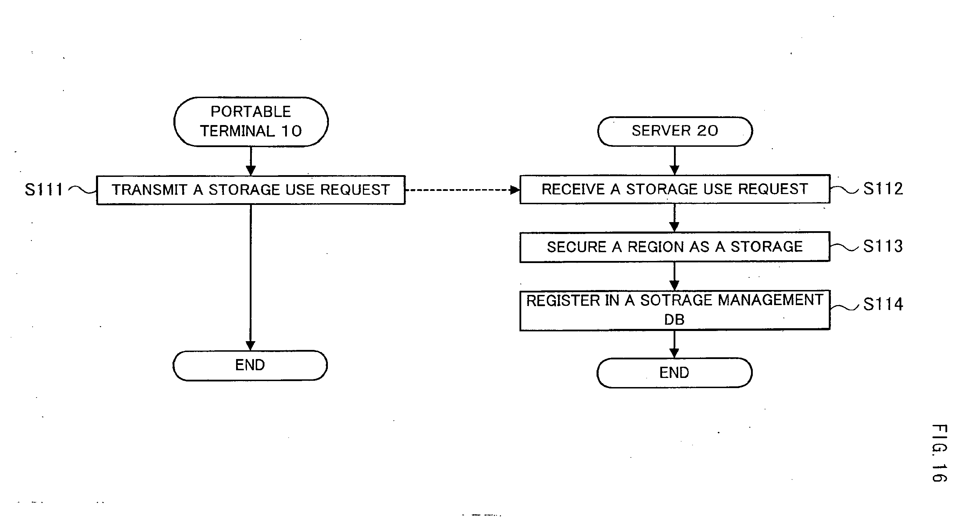

Fig. 16 shows operations in the processing described above.

First, in response to such a request from the user, the control part 11 prepares a storage use request and transfers the request to the transmission part 12. Thereafter, the transmission part 12 transmits the storage use request to the server 20 (Step 111).

In the server 20, the reception part 22 receives the storage use request and transfers the request to the control part 21. (Step 112).

Thereafter, the control part 21 instructs the storage management part 29 to register use of storages. Accordingly, the storage management part 29 registers the use of storages. Specifically, regions having capacities specified by the user are secured as the storages (Step 113). Moreover, storage names, accounting methods and licensing, which are transmitted together with the storage use request from the user, are registered in association with the storage IDs in the storage management DB 25 (Step 114). For example, it is assumed that the user of the terminal "T0001" sets a name of a storage corresponding to the first mailbox as "doggie", a name of a storage corresponding to the second mailbox as "child", and a name of a storage corresponding to the third mailbox as "friend" . Moreover, it is assumed that the user of the terminal "T0002" sets a name of a storage corresponding to the first mailbox as "family". As a result, contents of the storage management DB 25 are set as those as shown in Fig. 14 (b). Note that, as to a storage "T0002_02", since the user of the terminal "T0002" transmits no request for use thereof, the storage name, the accounting method and the licensing are all left blanks.

Note that, since operations when a moving image is transmitted to and saved in the server 20 by saving the moving image in a mailbox of the portable terminal 10 are the same as those of Fig. 7, detailed description thereof will be omitted.

Meanwhile, in this embodiment, it is assumed that the mailboxes of the portable terminal 10 and the storages of the server 20 are already associated with each other at the time of purchase of the portable terminal 10. Moreover, it is assumed that the moving image transmission program already includes such a function as to transmit, when a moving image is saved in a certain mailbox, the moving image to a storage associated with the mailbox. However, association between the mailboxes of the portable terminal 10 and the storages of the server 20 may be performed by an operation by the user who has purchased the portable terminal 10.

In such a case, the moving image transmission program includes only a function of transmitting, when a moving image is saved in a certain mailbox, the moving image to the server 20. Moreover, at the time of purchase of the portable terminal 10, corresponding information between the terminal IDs and the storage IDs as shown in Fig. 14 (a) is not stored in the server 20.

However, thereafter, when the user decides a name of a storage and demands to start using the storage, for example, corresponding information as shown in Fig. 14 (b) is prepared in the server 20. Thus, starting of use is registered. Note that, in this case, a plurality of storages are prepared for each of capacities which can be designated by the user. Accordingly, the storages may be allocated by appropriately selecting from the storages having capacities designated by the user.

Subsequently, as described in the second embodiment, a storage corresponding to a mailbox in which a moving image is saved is specified in the server 20, and the moving image is saved in the specified storage.

As described above, in this embodiment, the portable terminal 10 is sold in a state where as many functions required for a service to save moving images in storages as possible are included in the terminal. Thus, the user can easily start utilizing such a service without performing a complicated operation of downloading a program required for the service, and the like.

Accordingly, the description of this embodiment is finished.

Lastly, a hardware configuration of the portable terminal 10 will be described.

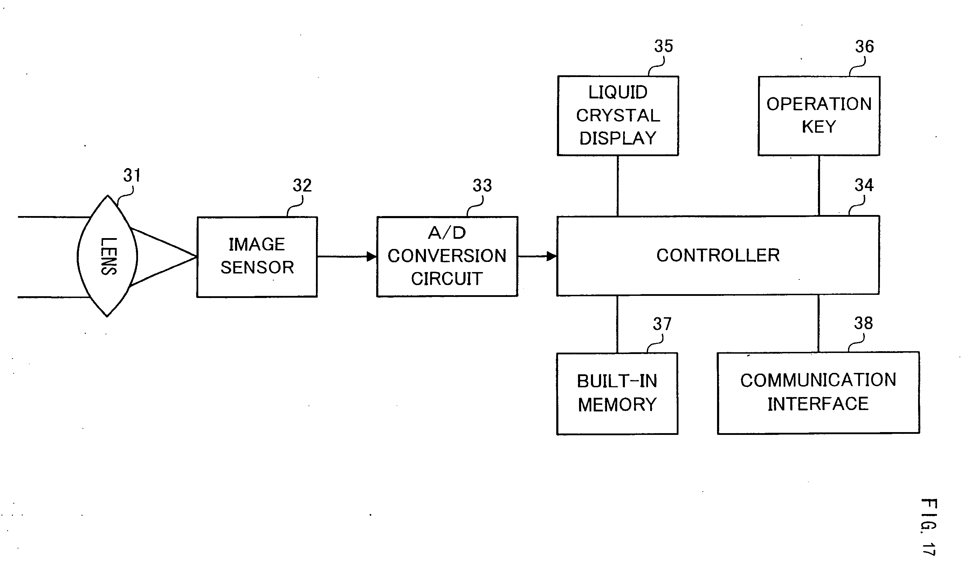

Fig. 17 is a view showing an example of the hardware configuration of the portable terminal 10. Here, the portable terminal 10 includes a lens 31, an image sensor 32, an A/D conversion circuit 33, a controller 34, a liquid crystal display 35, an operation key 36, a built-in memory 37 and a communication interface 38. Note that Fig. 17 schematically shows the configuration, and constituent components not directly related to the present invention may be omitted even if the components are generally required for a digital camera and the like.

The lens 31 forms an image of a subject on the image sensor 32. The image sensor 32 converts light entering through the lens 31 into an electric signal, and can be regarded as imaging means. The image sensor 32 is, for example, a CCD (charge coupled diode) or a CMOS (complementary metal oxide semiconductor). Moreover, the A/D conversion circuit 33 is a circuit for converting an image data signal inputted as an analog signal into a digital signal.

The controller 34 has a CPU (central processing unit) and performs various controls such as a control of signal input from the A/D conversion circuit 33, a control of display on the liquid crystal display 35, a control of input from the operation key 36, a control of output to the built-in memory 37 and a control of output to the communication interface 38.

The liquid crystal display 35 is a display for displaying a menu screen for performing various settings for images stored in the built-in memory 37 and a digital camera. The operation key 36 is a key for operating the various settings for the digital camera. Moreover, the built-in memory 37 is a memory which stores taken images, data for performing various settings, and the like. The communication interface 38 is an interface for transmitting the taken images to the outside and may be wired or wireless.

Note that, in the first to third embodiments, the user himself/herself operates the portable terminal 10 to install the mailboxes, the moving image transmission program and the like into the portable terminal 10 from the server 20 and to register starting of use of the storages of the server 20. However, in sales of the portable terminal 10, a service of taking care of those operations described above by a sales person may be provided.

Moreover, although it is assumed that all the storages exist under the same directory, the present invention is not necessarily limited to such a form. Specifically, a configuration may be adopted, in which an address of a device other than the server 20 is designated in preparation of storages, and corresponding information is prepared so as to send a moving image to the address. By adopting such a configuration to install software for realizing the functions of the server 20 on a personal or company PC, moving images can also be delivered to the personal or company PC by saving the images in a specific mailbox of the portable terminal 10.

Moreover, the menu displayed when moving images are saved in the portable terminal 10 is designed to be updated by the menu update command transmitted from the server 20. However, a menu including all options to be displayed on the portable terminal 10 may be prepared by the server 20 and transmitted to the portable terminal 10.

Furthermore, although it is assumed that the moving image transmission program monitors saving of moving images in all mailboxes, the program may monitor only saving of moving images in one mailbox. Specifically, a method for storing the moving image transmission program in each of the mailboxes or a method for allowing the mailbox itself to have a function as the moving image transmission program is conceivable. In this case, the moving image transmission program is a program for, upon recognizing that a moving image is saved in a specific mailbox of the portable terminal 10, transmitting the moving image to the server 20 together with the name of the mailbox or the storage ID.

Moreover, in the first to third embodiments, by saving a moving image in a mailbox, the saved moving image is acquired as a moving image to be transmitted.

However, as a trigger for acquisition of the moving image to be transmitted, many variations are conceivable other than the above.

For example, if "YES" is set in the local saving of the corresponding information management part 18, a moving image is saved in a mailbox after transmitted to the server 20. Thus, the moving image can be modified. Therefore, the following configuration can also be adopted. Specifically, by use of a request to overwrite (update request) after the moving image is modified as a trigger, the modified moving image is transmitted to the server 20.

Moreover, if a moving image saved in a certain folder is deleted, the moving image may be acquired as a moving image to be transmitted. Fundamentally, deletion of a moving image is carried out since the moving image is no longer required. However, depending on circumstances, it is not that there is absolutely no possibility that the deleted moving image will be required later. Consequently, the storage of the server 20 is utilized as a so-called trash box (since a moving image should have been transmitted to the server 20 in response to the first save request, if the moving image is deleted also from the server 20 by the subsequent operation, this variation is effective).

Note that restrictions may be imposed on how long the deleted moving image will be stored in the storage as the trash box.

Moreover, after transmission of a moving image has failed, unsent moving images may be automatically acquired at regular time intervals as moving images to be transmitted.

Furthermore, it is also possible to acquire, as the moving image to be transmitted, not only the already saved moving image but also a moving image to be saved in a specific mailbox. Specifically, the following form is conceivable. Specifically, the user performs an operation of transmitting a moving image directly to the server 20 without performing an operation of saving the moving image in a mailbox. However, prior to the transmission operation, a mailbox for saving a moving image if the moving image cannot be saved in a storage of the server 20 is designated. Given this perspective, the present invention can be extensively grasped from a form in which saving of a moving image in a mailbox leads to transmission of the moving image to the server 20 to a form in which a moving image is directly transmitted to the server 20 regardless of saving of the image in a mailbox. Note that, in this case, if a moving image cannot be saved in a storage of the server 20, the image will be saved in a previously designated mailbox. Thus, the previously designated mailbox is also included in a concept of "a mailbox designated as a location to save a moving image".

Furthermore, whether or not to save a moving image in a mailbox after transmitted is determined by the local saving previously set by the user. However, whether or not to save the image in the mailbox may be determined, for example, in accordance with a format (extension) of the moving image or may be determined by use of any conditions regarding other mailboxes or moving images.

Moreover, in the above description, there was no mention made of authentication when a moving image is transmitted to and saved in the server 20. However, in order to prepare for the case where the portable terminal 10 is lost or stolen, it may be required to enter a password and the like also when the moving image is transmitted to and saved in the server 20.

Furthermore, in the above description, a mailbox and a storage are previously set, and a moving image is saved in the prepared mailbox. However, an operation of setting the mailbox and the storage may be performed when the moving image is taken. Accordingly, even if an unexpected moving image or the like is taken, it suffices that a mailbox is easily prepared on the spot and the moving image can be saved therein.

Moreover, in the first to third embodiments, the description has been given by assuming that moving images saved in mailboxes of the portable terminal 10 are transmitted to the server 20. Meanwhile, the present invention can also be perceived as one for transmitting to the server 20 moving images saved in mailboxes of a general information processor (for example, PC) other than the portable terminal 10. For example, in an information processor having a large amount of memory such as a PC, it is conceivable that, even after a moving image is transmitted to the server 20, the moving image is processed or modified. Thus, "YES" is often set in the local saving by the corresponding information management part 18. In such a case, the above-described transmission using a request to update a moving image as a trigger becomes particularly effective.

Furthermore, in the first to third embodiments, the description has been given by assuming that moving images are transmitted and saved. Meanwhile, the present invention can also be applied to image data including still images other than moving images or to other general data (for example, data prepared by spreadsheet software, drawing software or the like).

As described above, in the embodiment of the present invention, the invention is configured in such a manner that, when data is saved in a mailbox of the portable terminal 10, the data is saved in a storage of the server 20, the storage corresponding to the mailbox. According to the configuration as described above, data taken or prepared by the portable terminal can be saved in a server computer by easy operations. Moreover, at the same time, the user can perform operations while recognizing a save destination in the server computer.

Moreover, in the embodiment of the present invention, two operation processes including saving and transmission of data are reduced to only one operation process that is saving (= transmission). Thus, the user can also perform a transmission operation just by selecting (multiple selection is possible) a mailbox corresponding to a save destination where he/she wishes to send data among several mailboxes and saving the data in the mailbox.

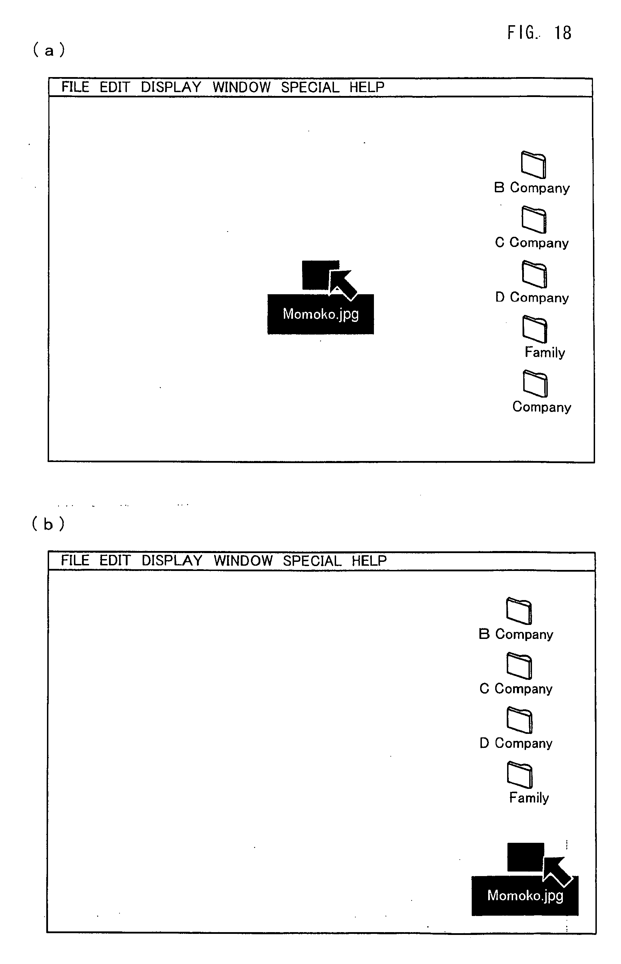

In this case, as a concrete user interface, it is conceivable that data to be saved is saved in a desired mailbox by drag and drop. Specifically, as shown in Fig. 18 (a), first, "momoko.jpg" to be saved is selected by operating a mouse and the like. Next, as shown in Fig. 18 (b), "momoko. jpg" is dragged to a mailbox "company" and dropped, and thereby "momoko.jpg" is transmitted to a save destination corresponding to the mailbox "company" .

For example, by using the user interface as described above, the concept that data is saved and transmitted is changed to the concept that data is only saved (= transmitted). Thus, for a user unfamiliar with a computer, a hurdle in the computer use is clearly lowered. Hence, a number of users can enter computer world. Consequently, effects achieved by the present invention are immeasurable.

### Description of Reference Numerals

- 10: portable terminal,
- 1, 21: 1 control part,
- 12, 23: transmission part,
- 13, 22: reception part,
- 14: request reception part,
- 15: installation part,
- 16: moving image acquisition part,
- 17 m: mailbox specification part,
- 18: corresponding information management part,
- 19: moving image organizing part,
- 20: server,
- 24: storage preparation part,
- 25: storage management DB,
- 26: command preparation part,
- 27: program preparation part,
- 28: moving image save part,
- 29: storage management part

## Claims

1. An information processor comprising:
acquisition means for acquiring data to be saved;
specification means for specifying a folder designated as a location to save the data among folders previously prepared in the processor; and
transmission means for transmitting the data to a save destination in another device, the destination previously associated with the folder specified by the specification means, in response to a request to save the data in the folder.

2. The information processor according to claim 1, further comprising:
save means for saving the data in the folder after the data is transmitted by the transmission means.

3. The information processor according to claim 2, wherein the transmission means transmits the data to the save destination in another device, the destination being previously associated with the folder, in response to a request to update the data saved by the save means.

4. The information processor according to claim 2, wherein the save means saves the data in the folder if any of the data and the folder meets predetermined conditions.

5. The information processor according to claim 1, further comprising:
save means for saving information related to the data, instead of the data, in the folder after the data is transmitted by the transmission means.

6. The information processor according to claim 5, wherein the save means saves the information related to the data in the folder if any of the data and the folder meets predetermined conditions.

7. The information processor according to claim 1, wherein the transmission means retransmits the data at a predetermined point in time if the data is not saved in the save destination in the another device.

8. A portable terminal device comprising:
photographing means for taking an image;
specification means for specifying a folder designated as a location to save the image taken by the photographing means among folders previously prepared in the device; and
transmission means for transmitting the image to a save destination in another device, the destination previously associated with the folder specified by the specification means, regardless of a request to transmit the image.

9. A server computer comprising:
reception means for receiving data from another device;
specification means for specifying a folder designated as a location to save the data among folders in the another device; and
save means for saving the data in a save destination previously associated with the folder specified by the specification means.

10. A server computer comprising:
first preparation means for preparing a folder in another device;
second preparation means for preparing a save destination for data, the destination corresponding to the folder designated as a location to save the data; and
third preparation means for preparing corresponding information between the folder prepared by the first preparation means and the save destination prepared by the second preparation means.

11. A server computer comprising:
management means for managing corresponding information between a folder in another device and a save destination for data, the destination corresponding to the folder designated as a location to save the data;
reception means for receiving a request to start use of the save destination; and
registration means for registering, in the corresponding information, information indicating that the use of the save destination is started, in response to reception of the request.

12. A data save method for saving data by transmitting the data from a first device to a second device, comprising the steps of:
preparing corresponding information between a folder in the first device and a save destination in the second device;
acquiring the data by the first device;
specifying a folder designated as a location to save the data among folders in the first device;
obtaining a save destination in the second device, the destination corresponding to the specified folder, by referring to the corresponding information, in response to a request to save the data in the folder; and
saving the data in the obtained save destination by the second device.

13. The data save method according to claim 12, wherein
in the preparation step, the corresponding information between folders in a plurality of the first devices and a save destination in the second device is prepared, and
in the saving step, information making it possible to identify a first device which has acquired the data is saved in association with the data.

14. A program for causing a computer to execute functions of:
specifying a folder designated as a location to save data among folders previously prepared in the computer; and
performing processing for transmitting the data to a save destination in another device, the destination being previously associated with the specified folder, in response to a request to save the data in the folder.

15. The program according to claim 14, wherein the program further causes the computer to execute a function of:
saving information related to the data, instead of the data, in the folder after the data is transmitted.
